# EUROPÄISCHE PATENTSCHRIFT

(11) **EP 0 984 215 B1**
(45) Veröffentlichungstag und Bekanntmachung des Hinweises auf die Patenterteilung: **08.09.2004**
(21) Anmeldenummer: 99112695.4
(22) Anmeldetag: 02.07.1999
(51) Int. Cl.: F16K 31/16, F16K 31/44

(54) **Druckmittelbetriebener Stellantrieb mit einem Stellungsregler**
Fluid actuated actuator with a position controller
Dispositif de manoeuvre à pression de fluide avec un régulateur de position

(30) Priorität: 29.08.1998 DE 19839510
(43) Veröffentlichungstag der Anmeldung: 08.03.2000
(73) Patentinhaber: Hartmann & Braun GmbH & Co. KG, 65760 Eschborn (DE)
(72) Erfinder: Thönebe, Werner, 30890 Barsinghausen (DE)

(56) Entgegenhaltungen:
- DE-A- 4 239 432
- US-A- 4 343 224
- US-A- 4 625 758
- US-A- 4 628 793

## Beschreibung

Die Erfindung betrifft einen druckmittelbetriebenen Stellantrieb mit einem Stellungsregler zum geregelten Eingriff auf die Öffnungs- bzw Schließbetätigung beispielsweise eines Prozeßventiles, sowie mit einer Übertragungseinrichtung zur Übertragung der Bewegung eines Antriebsgliedes auf den Stellungsregler, gemäß Oberbegriff des Patentanspruches 1.

Druckmittelbetriebene Stellantriebe dieser Art sind beispielsweise zur Betätigung von Prozeßventilen im Einsatz. Dabei wird grundsätzlich eine hohe Stellgenauigkeit gefordert, die den Einsatz eines Stellungsreglers notwendig macht, der systembedingte Stellungenauigkeiten ausgleicht.

Stellungenauigkeiten können von einem weitestgehend kalibrierten Ausgangszustand ausgehend entstehen, wenn beispielsweise durch Reibung Abnutzung entsteht. Dies soll vom Stellungsregler erkannt werden und eine entsprechende Stellkorrektur herbeiführen. Doch auch der Abgriff zwischen Stellorgan und Regler unterliegt der Abnutzung. Die mechanische Bewegungsübertragung zwischen Antriebsglied und Stellungsregler muß daher auch langfristig zuverlässig und damit spielfrei gegeben sein.

Diese Problematik der auch langfristig spielfreien Bewegungsankopplung zwischen Antriebsglied und Stellungsregler ist unter anderem in der DE 42 39 432 C2 dargestellt.

Die Bewegungsübergabe erfolgt dabei in den meisten Fällen von einer linearen Bewegung des Stellantriebes ausgehend in eine Drehbewegung des Rückführhebels des Stellungsreglers.

Diese Anforderung wird beim überwiegenden Teil der Ventil- und Reglerhersteller dadurch gelöst, daß ein Hebel auf der Reglerwelle mit einem starren Bolzen bestückt ist, der in ein Langloch eines antriebsseitigen Blechwinkels eintaucht. Um bei der Aufund Abwärtsbewegung der Antriebsstange das Spiel zwischen Bolzen und Langloch zu eliminieren, wird der Bolzen mit einer Drahtfeder einseitig im Langloch des Blechwinkels verspannt.

Aufgrund der linearen Schubstangenbewegung und der drehenden Bewegung des Rückführhebels ergibt sich zwischen dem Blechwinkel und dem Bolzen eine Relativbewegung. Da die besagten Teile reibend miteinander wirken resultiert hieraus auch ein entsprechender Verschleiß. Es entsteht ein Spiel welches die Drahtfeder nach einer entsprechenden Betriebszeit nicht mehr ausgleichen kann. Hieraus resultiert wiederum eine zeitabhängige Hysterese die somit zu erheblichen Ungenauigkeiten führt.

Zur Beseitigung dieser Problematik sind Prinzipien bekannt, wie dies im oben genannten Stand der Technik auch gezeigt wird, bei denen statt einer metallischen Verbindung zwischen Bolzen und Blechwinkel ein axial federnd gelagerter Kunststoffkegel auf dem Reglerhebel schubstangenseitig zwischen zwei Rundstangen drückt.

Ein Nachteil dieser Lösung kann sein, daß durch Anbautoleranzen des Reglers die axiale Vorspannung des Kegels sehr differiert und somit unterschiedlich starke Belastungen auf den Reglerhebel einwirken, insbesondere bei langen Hebeln, was auf die Lagerung der Reglerwelle Rückwirkungen hat.

Davon ausgehend liegt der Erfindung die Aufgabe zugrunde eine an sich vorteilhafte Werkstoffpaarung zu nutzen und gleichzeitig eine auch langfristig spielfreie Bewegungsübertragung zu erreichen.

Die gestellte Aufgabe wird bei einem druckmittelbetriebenen Stellantrieb der gattungsgemäßen Art erfindungsgemäß dadurch gelöst, daß die Übertragungseinrichtung mit einem Rückstellhebel versehen ist, welcher einen drehfedernd vorgespannten mehreckigen Drehschieber aufweist, der unter drehfederbewirkter leichter Verkantung zwischen zwei parallel verlaufenden Rundstangenabschnitten eines mit einer Schubstange verbundenen Mitnehmers eingreift.

Weitere vorteilhafte Ausgestaltungen der Erfindung sind in den abhängigen Ansprüchen angegeben.

Dabei ist wesentlich, daß das Spiel zwischen den Rundstangenabschnitten des Mitnehmers und der Schlüsselweite des mehreckigen Drehschiebers durch Verkanten des Drehschiebers eliminiert wird. D.h. daß die Dimensionierung des mehreckigen Drehschiebers auf den Abstand der beiden Rundstangenabschnitte so gewählt ist, daß die Federvorspannung den Drehschieber in einer mehr oder weniger verkanteten Position hält. Damit wird das durch Abnutzung entstehende Spiel durch quasi selbstnachstellende Verkantung eliminiert.

Dabei ist die Anordnung so gewählt, daß die am Rückstellhebel angreifenden Kräfte keine axiale Komponente haben, die als Biegemoment auf den Rückstellhebel und/oder auf das Reglerwellen-Lager einwirken.

Der Vorteil ist, eine sichere und nachhaltig spielfreie Kopplung zwischen Stellungsregler und Antriebsstange zu erhalten. Hierdurch bleibt die Abtastung des Stellweges und damit die Regelung als solches nahezu hysteresefrei. Außerdem sind die Teile sehr einfach zu montieren und die Werkstoffkombination zwischen Kunststoff und Stahl bzw. Edelstahl gewährleistet einen minimalen Verschleiß.

Die Erfindung ist in der Zeichnung dargestellt und nachfolgend näher beschrieben.

Es zeigt:
- Fig.1:: Stellungsregler in perspektivischer Ansicht.
- Fig. 2:: Seitenansicht auf den Kopplungsbereich zwischen Stellungsregler und Ventilstange.

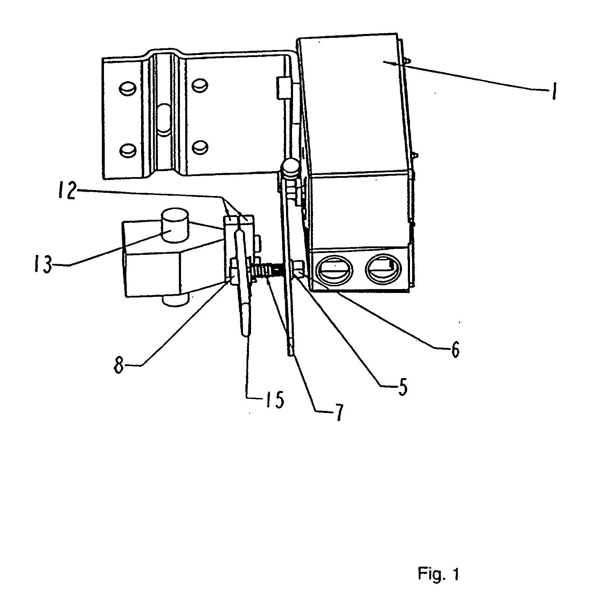

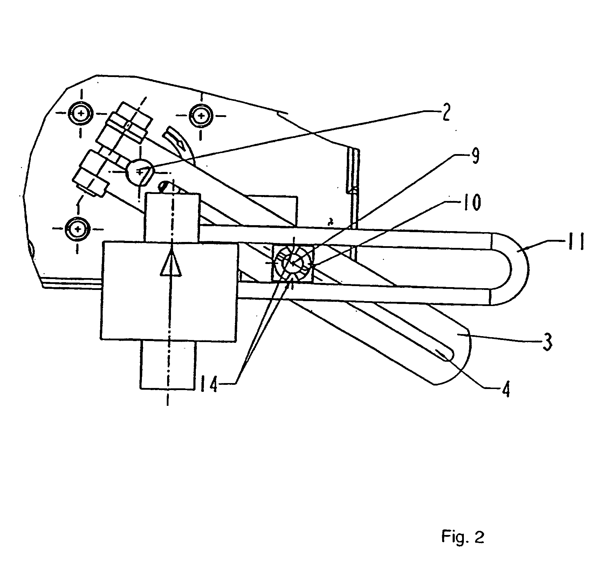

Fig. 1 und Fig 2 sind im folgenden Text abwechselnd einzusehen und mit dem nachfolgenden Beschreibungstext zu korrelieren. Fig 1 zeigt dabei den Stellungsregler mit der erfindungsgemäßen Kopplung zwischen Stellungsreglerwelle und Antriebs- bzw Schubstange des nicht weiter dargestellten Ventiles.

Der Stellungsregler 1 ist ventilseitig an seiner Rückwand auf der Reglerwelle 2 mit einem Hebel 3 bestückt. Dieser Hebel 3 trägt einen in seinem Langloch 4 verschiebbaren Bolzen 9, der mit seiner Scheibe 5 und Mutter 6 starr befestigt ist. Dieser Bolzen 9 trägt wiederum eine Drahtfeder 7 und einen Drehschieber 8 aus Kunststoff. Die Drehfeder 7 hat gemäß der Erfindung drei Funktionen zu erfüllen:

Erstens nimmt sie mit ihrem unteren, auf Reibschluß ausgelegten Innendurchmesser die axiale und radiale Vorspannung des oberen Federteiles auf, zweitens erzeugt sie mit dem auf Abstand gewickelten oberen Windungsteil eine zum Bolzen 9 axial gerichtete Vorspannung auf den Drehschieber 8, der sich am quer zum Bolzen 9 leichtgängig eingefügten Stift 10 abstützt. Drittens erzeugt die Feder 7 ein Drehmoment auf den Drehschieber 8, so daß das Spiel zwischen dem Drehschieber 8 und den parallel liegenden Rundstababschnitten des Mitnehmers 11, der über die Halterung 12 an der Schubstange 13 befestigt ist, eliminiert wird.

Der durch die Relativbewegung des Drehschiebers 8 im Mitnehmer 11 nicht vermeidbare Abrieb am Drehschieber 8 wird durch die Stellkraft der Drehfeder 7 ständig kompensiert.

Ein weiteres Merkmal dieser Konstruktion ist, daß beim Abbauen des Reglers 1 vom Ventil, incl. der Hebelbestandteile 4,...,10, der Drehschieber 8 sich durch das Drehmoment der Drehfeder 7 nur bis zum Anschlag 14 am Stift entspannen kann. Die Rippen 15 des Drehschiebers 8 verhindern, daß der Drehschieber 8 beim Anbauen am Ventil nicht durch den Mitnehmer 11 hindurchgeschoben werden kann, was sonst bei der weiteren Montage zu Handlingsproblemen führen würde.

Insgesamt ist diese Ankopplung zweckmäßig und leicht montierbar und gewährleistet einen langen störungsfreien Betrieb.

## Patentansprüche

1. Druckmittelbetriebener Stellantrieb mit einem Stellungsregler (1) zum geregelten Eingriff auf die Öffnungs- bzw Schließbetätigung beispielsweise eines Prozeßventiles, sowie mit einer mechanischen Übertragungseinrichtung zur Übertragung der Bewegung eines Antriebsgliedes auf den Stellungsregler
**dadurch gekennzeichnet,**
**daß** die Übertragungseinrichtung mit einem Rückstellhebel (3) versehen ist, welcher einen drehfedernd vorgespannten mehreckigen Drehschieber (8) aufweist, der unter drehfederbewirkter leichter Verkantung zwischen zwei parallel verlaufenden Rundstangenabschnitten eines mit einer Schubstange (13) verbundenen Mitnehmers (11) eingreift.

2. Druckmittelbetriebener Stellantrieb nach Anspruch 1,
**dadurch gekennzeichnet,**
**daß** der Drehschieber (8) eine viereckige Außenkontur hat.

3. Druckmittelbetriebener Stellantrieb nach Anspruch 2,
**dadurch gekennzeichnet,**
**daß** mindestens 2 parallele Außenkanten des Drehschiebers (8) einen Abstand zueinander haben, der geringfügig kleiner als der Abstand der Rundstangenabschnitte des Mitnehmers (11) im Eingriffsbereich des Drehschiebers (8) ist.

4. Druckmittelbetriebener Stellantrieb nach einem der vorhergehenden Ansprüche ,
**dadurch gekennzeichnet,**
**daß** der Drehschieber (8) aus Kunststoff besteht.

5. Druckmittelbetriebener Stellantrieb nach einem der vorhergehenden Ansprüche ,
**dadurch gekennzeichnet,**
**daß** die Rundstangen bzw die im Drehschiebereingriff stehenden Rundstangenabschnitte aus Edelstahl bestehen.

## Claims

1. Pressure medium-operated actuator with a position regulator (1) for regulated action on the opening and closing actuation of, for example, a process valve, and with a mechanical transmission device for transmitting the movement of a driving member to the position regulator, **characterized in that** the transmission device is provided with a resetting lever (3) having a polygonal rotary slide (8) which is prestressed in the manner of a torsion spring and which, by being tilted slightly under a torsion spring effect, engages between two parallel round-rod portions of a driver (11) connected to a push-rod (13).

2. Pressure medium-operated actuator according to Claim 1, **characterized in that** the rotary slide (8) has a quadrangular outer contour.

3. Pressure medium-operated actuator according to Claim 2, **characterized in that** at least two parallel outer edges of the rotary slide (8) have a spacing from one another which is slightly smaller than the spacing of the round-rod portions of the driver (11) in the region of engagement of the rotary slide (8).

4. Pressure medium-operated actuator according to one of the preceding claims, **characterized in that** the rotary slide (8) consists of plastic.

5. Pressure medium-operated actuator according to one of the preceding claims, **characterized in that** the round rods or the round-rod portions which are in engagement with the rotary slide consist of high-grade steel.

## Revendications

1. Actionneur à pression de fluide avec un régulateur de position (1) pour agir de manière régulée sur l'actionnement d'ouverture ou de fermeture par exemple d'une soupape de processus, ainsi qu'avec un dispositif de transfert mécanique pour le transfert du mouvement d'un organe d'entraînement au régulateur de position,
**caractérisé en ce que**
le dispositif de transfert est pourvu d'un levier de rappel (3) qui présente un tiroir rotatif (8) polygonal précontraint à la manière d'un ressort de torsion, qui vient en prise par léger basculement provoqué par le ressort de torsion entre deux portions de tige ronde s'étendant parallèlement, d'un entraîneur (11) connecté à une tringle de poussée (13).

2. Actionneur à pression de fluide selon la revendication 1,
**caractérisé en ce que**
le tiroir rotatif (8) a un contour extérieur carré.

3. Actionneur à pression de fluide selon la revendication 2,
**caractérisé en ce que**
au moins deux arêtes extérieures parallèles du tiroir rotatif (8) ont un écartement l'une de l'autre qui est légèrement inférieur à l'écartement des portions de tige ronde de l'entraîneur (11) dans la région d'engagement du tiroir rotatif (8).

4. Actionneur à pression de fluide selon l'une quelconque des revendications précédentes,
**caractérisé en ce que**
le tiroir rotatif (8) se compose de plastique.

5. Actionneur à pression de fluide selon l'une quelconque des revendications précédentes,
**caractérisé en ce que**
les tiges rondes ou les portions de tige ronde en prise dans le tiroir rotatif se composent d'acier surfin.
